# EUROPEAN PATENT APPLICATION

(11) **EP 4 769 452 A1**
(43) Date of publication of application: **01.07.2026**
(21) Application number: 24872757.0
(22) Date of filing: 30.08.2024
(51) Int. Cl.: H01B 13/00, H01B 3/30, H01B 1/02, H01B 5/14, C08J 7/044

(54) **METHOD FOR MANUFACTURING FLEXIBLE METAL LAMINATED FILM FOR ULTRAHIGH FREQUENCY AND FLEXIBLE METAL LAMINATED FILM MANUFACTURED THEREBY**

(30) Priority: 27.09.2023 KR 20230130232
(71) Applicant: C&G Hi Tech Co., Ltd., Anseong-si, Gyeonggi-do 17554 (KR)
(72) Inventor: HONG, Sa Mun, Yongin-si, Gyeonggi-do 17123 (KR); HONG, Jung Sun, Hwaseong-si, Gyeonggi-do 18488 (KR); KOH, Seok Keun, Seoul 06255 (KR); LEE, Sang Jun, Suwon-si, Gyeonggi-do 16676 (KR)
(74) Representative: dompatent
(86) International application number: PCT/KR2024/013028
(87) International publication number: WO 2025/071049

(57) **Abstract**

The present invention relates to a method for manufacturing a flexible metal laminated film, and more particularly, to a method for manufacturing flexible metal laminated film for ultra-high frequency to ensure stability between a low-dielectric material and a metal electrode layer.

## Description

### FIELD

The present invention relates to a method for manufacturing a flexible metal laminated film, and more particularly, to a method for manufacturing a flexible metal laminated film for ultra-high frequency to secure stability between a low-dielectric material and a metal electrode layer.

### BACKGROUND

With the recent commercialization of 5G communication, ultra-high-speed communication infrastructure is being established in Korea using frequency bands in the 3.5GHz and 28 GHz ranges. As frequency bands increase in this manner, signal loss frequently occurs between communication modules in mobile products (e.g., smartphones, smartwatches) or automobiles.

Signal loss mainly occurs in antennas that transmit and receive signals, and it is greatly affected by the intrinsic properties of the insulator (dielectric constant, dielectric loss) of the circuit constituting the antenna.

In order to minimize signal loss, it is advantageous for the insulator to have a lower dielectric constant and dielectric loss. In conventional 4G communication, a PI (polyimide) film was used as the insulator, however, with the advent of 5G communication, low-dielectric materials are being developed or discovered to manufacture circuit boards.

As a representative example, Apple Inc. uses Liquid Crystal Polymer (hereinafter, LCP), and the dielectric constant of LCP is 3.3, which has superior dielectric properties compared to PI having a dielectric constant of 3.9.

However, LCP materials are mainly produced in Japan, and their production cost is higher than that of conventional PI. Therefore, domestic companies are manufacturing antennas using Modified PI (hereinafter, MPI).

MPI is a material in which fluorine is added to conventional PI to lower the dielectric constant. Its dielectric constant can be adjusted between 2.7 and 3.1 depending on the fluorine content, its production cost is lower than that of LCP, and it exhibits superior adhesion when forming or bonding copper electrodes compared to LCP. However, in actual operating environments, MPI has higher signal loss than LCP, but this is being overcome through changes in circuit design.

When communication advances beyond 5G to 6G, signals will be transmitted and received in the ultra-high-frequency rage of 100 GHz. In such a case, the use of fluororesin as an insulator becomes inevitable.

Among polymers, fluororesin has the lowest dielectric constant. Representatively, Polytetrafluoroethylene (hereinafter, PTFE) has a very low dielectric constant of 2.1 and possesses the best dielectric loss characteristics among fluororesins. However, despite these excellent dielectric properties, the strong covalent bond between carbon and fluorine (C-F) - its basic connection structure - makes it highly non-reactive with other substances. This acts as a disadvantage by hindering a robust bond between the conductive metal electrode layer and the insulting layer when manufacturing flexible metal laminated films.

When electroplating is performed after PVD deposition on general PTFE, delamination may occur during the plating process, or a low peel strength of less than 1 N/cm measured after the completion of plating. Due to these characteristics, fluororesin has excellent chemical resistance and can be used in acid and alkali solutions. Therefore, if strong bonding with the electrode layer is possible, it is expected to be applicable to circuit boards for sensors and other devices requiring chemical resistance.

Various surface treatments, such as ion beam, electron-beam plasma in a vacuum, have been implemented to improve the adhesion of such fluororesins.

According to a recent reference, "Adhesive-free adhesion between heat-assisted plasma-treated fluoropolymers (PTFE, PFA) and plasma-jet-treated polydimethylsiloxane (PDMS) and its application," heat-assisted plasma (hereinafter, HAP) surface treatment was applied to enhance the adhesion between PTFE and PDMS. In the HAP treatment, a plasma jet is used, and when the power is increased, the surface temperature rises above the glass transition temperature (Tg) while surface modification occurs simultaneously. At this point, the PTFE film gains the effect of recovering the mechanical strength of the surface that was weakened by the skiving process during production. The recovered surface has high hardness and strength, and when bonded with PDMS, the PTFE surface itself peels off rather than the interface between PTFE and PDMS, thereby resulting in a higher peel strength compared to the surface weakened by skiving.

In order to apply the aforementioned process to large-area, roll-type products, multiple plasma torches must be arranged in a single row. In this case, when the torches are overlapped, they must be aligned so that the irradiated ions are uniformly distributed in the width direction based on the ion distribution curve of the plasma. Otherwise, variations in quality may occur in the width direction of the film. Furthermore, when a thin film of approximately 50*µ*m is exposed to high temperatures during a roll-to-roll process, elongation occurs in the longitudinal direction, leading to the problem of longitudinal wrinkles.

### SUMMARY

Various aspects of the present invention are directed to providing a method for manufacturing a flexible metal laminated film for ultra-high frequency to secure stability between a low-dielectric material and a metal electrode layer.

The present invention and methods of accomplishing the same may be understood more readily by reference to the following detailed description of embodiments.

The above object may be achieved by a method for manufacturing a flexible metal laminated film for ultra-high frequency, including: a step of preparing a low-dielectric material; a step of heat-treating the low-dielectric material; a step of performing a first surface treatment on the surface of the heat-treated low-dielectric material; a step of performing a second surface treatment on the first-surface-treated low-dielectric material; a step of sequentially performing surface treatments up to an n-th stage on the second-surface-treated low-dielectric material; a step of forming a first metal layer on the surface of the low-dielectric material on which the n-th surface treatment has been completed; a step of forming a second metal layer on the first metal layer; a step of forming a metal electrode layer on the second metal layer; wherein the n-th stage is a 3^{rd} to 5^{th} stage.

The low-dielectric material is characterized in that it is composed of a polymer containing elements of carbon (C), hydrogen (H), and oxygen (O), or a polymer containing the elements of carbon (C), hydrogen (H), and oxygen (O) and further containing nitrogen (N) or fluorine (F).

The low-dielectric material is characterized in that it includes one or more selected from the group consisting of polyethylene (PE), polypropylene (PP), polyethylene terephthalate (PET), polycyclohexylenedimethylene terephthalate (PCT), polyimide (PI), modified polyimide (MPI) polytetrafluoroethylene (PTFE), polyoxymethylene (PFA), fluorinated ethylene propylene (FEP), ethylene tetrafluoroethylene (ETFE), polyvinylidene fluoride (PVDF), glass fiber, and polytetrafluoroethylene (PTFE).

The heat treatment is characterized in that it is performed at a temperature of 80 to 150°C using an infrared (IR) heater.

The first surface treatment is characterized in that it is performed using a linear ion beam with an ionized active gas or inert gas as a reaction gas. The first surface treatment is characterized in that it is performed using O₂, N₂, H₂, or Ar gas as the reaction gas.

The second to n-th surface treatments are characterized in that they are performed using a linear ion beam with an ionized active gas as a reaction gas. The second to n-th surface treatments are characterized in that they are performed using O₂, N₂, or H₂ gas as the reaction gas.

An ion dose density in the linear ion beam is characterized in that it is in the range of 1×10⁻¹⁴ to 5×10⁻¹⁷ dose/cm², The input voltage applied in the linear ion beam is characterized in that it is in the range of 0.5 to 2.0 kV.

The step of forming the first metal layer Is characterized in that one or more metals selected from the group consisting of copper (Cu), nickel (Ni), nickel-chromium alloy (NiCr), and nickel-copper alloy (NiCu) are used, wherein, in the case of nickel alloys, the nickel content is 70% or more.

The step of forming the first metal layer is characterized in that a physical vapor deposition (PVD) or evaporation process is performed.

The step of forming the second metal layer is characterized in that one or more metals selected from the group consisting of copper (Cu), aluminum (Al), silver (Ag), gold (Au), platinum (Pt), and alloys thereof are used. The step of forming the second metal layer is characterized in that a physical vapor deposition (PVD) or evaporation process is performed.

The metal electrode layer is characterized in that it is formed by performing electroplating using a meatal such as gold, silver, cobalt, aluminum, iron, nickel, chromium, or copper.

According to the present invention, a method for manufacturing a flexible metal laminated film for ultra-high frequency is provided to secure stability between a low-dielectric material and a metal electrode layer.

Specially, according to the present invention, reactivity between dissimilar materials can be improved by applying heat treatment to low-dielectric materials to induce outgassing and surface morphology changs, and by performing first, second, and n-th order surface treatments using low-energy ion beams to increase the surface energy of the material. In addition, by performing multilayer conductive metal thin-film deposition and plating processes, it is possible to increase the adhesion and provide bonding stability between the surface-treated low-dielectric material, which is an insulator, and the metal electrode, which is a conductor.

The flexible multilayer metal laminated film for ultra-high frequency manufactured by the method for manufacturing flexible metal laminated film for ultra-high frequency according to the present invention may be applied to, for example, AiP (Antenna in Package) for 5G and 6G communications, sensors for autonomous vehicles, and the like. Accordingly, it is possible to achieve the effect of minimizing signal loss applied to various communication devices. However, the application examples of the flexible multilayer metal laminated film for ultra-high frequency are not limited thereto.

However, the effects of the present invention are not limited to the above-mentioned effects, and other effects not mentioned herein will be clearly understood by those skilled in the art from the flowing description.

### BRIFE DESCRIPTION OF DRAWINGS

FIG. 1 is a flowchart sequentially showing a method for manufacturing a flexible metal laminated film according to according to an embodiment of the present invention.
FIG. 2 is a schematic diagram showing the structure of a flexible metal laminated film manufactured according to an embodiment of the present invention.
FIG. 3 is a schematic diagram showing the structure of a flexible metal laminated film manufactured according to another embodiment of the present invention.
FIG. 4 is a diagram showing the results of surface roughness measurement according to Experimental Example 1 of the present invention.
FIG. 5 is a diagram showing the results of peel strength measurement according to Experimental Example 2 of the present invention.
FIG. 6 is a diagram showing the results of XPS measurement according to Experimental Example 3 of the present invention.
FIG. 7 is a diagram showing the range of binding energy by chemical bonds.
FIG. 8 is a graph showing the results of peel strength measurement according to ion dose density according to Experimental Example 4.
FIG. 9 is a graph showing the results of peel strength measurement according to ion beam input voltage according to Experimental Example 5.

### DETAILED DESCRIPTION OF THE EMBODIMENTS

Hereafter, the present invention will be described in detail with reference to embodiments and drawings of the present invention. These embodiments are presented only as examples to describe the present invention in more detail, and it will be apparent to those skilled in the art that the scope of the present invention is not limited by these embodiments.

In addition, unless otherwise defined, all technical and scientific terms used herein have the same meanings as commonly understood by those skilled in the art to which the present invention pertains. In case of conflict, the definitions in the present specification shall prevail.

In the drawings, portions irrelevant to the description are omitted in order to clearly explain the proposed invention, and similar reference numerals are assigned to similar portions throughout the specification. Further, when a portion is described as "including" a certain component, this means that other components unless specifically stated otherwise. In addition, the term "unit" described in the specification means a unit or block that performs a specific function.

In each step, identification codes (first, second, etc.) are used to convenience of description, and the identification codes do not describe the order of each step. Each step may be carried out in a different order from the stated order unless a specific order is clearly indicated by the context. That is, each step may be carried out in the same order as stated, my be carried out substantially simultaneously, or may be carried out in the reverse order.

Hereinafter, implementations and embodiments of the present invention will be described in detail with reference to the accompanying drawings. However, the present invention is not limited to these implementations, embodiments and drawings.

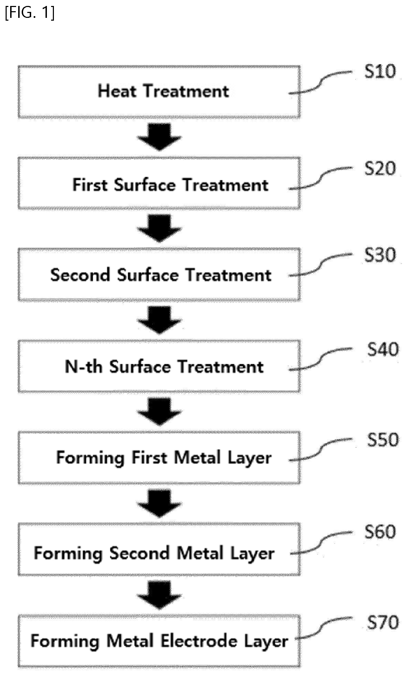

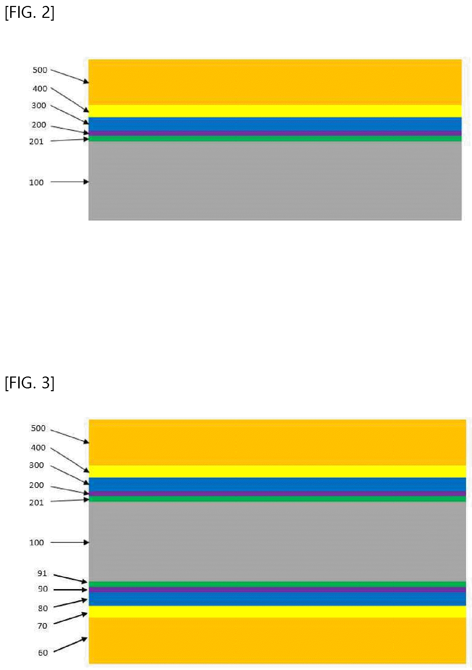

FIG. 1 is a flowchart sequentially showing a method for manufacturing a flexible metal laminated film according to according to an embodiment of the present invention, and FIG. 2 is a schematic diagram showing the structure of a flexible metal laminated film manufactured according to an embodiment of the present invention.

Referring to FIG. 1 and FIG. 2 together, the method for manufacturing the flexible metal laminated film includes: a step of preparing a low-dielectric material; a step of heat-treating the low-dielectric material (S10); a step of performing a first surface treatment on the surface of the heat-treated low-dielectric material (S20); a step of performing a second surface treatment on the first-surface-treated low-dielectric material (S30); a step of sequentially performing surface treatments up to an n-th stage on the second-surface-treated low-dielectric material (S40); a step of forming a first metal layer on the surface of the low-dielectric material on which the n-th surface treatment has been completed (S50); a step of forming a second metal layer on the first metal layer (S60); and a step of forming a metal electrode layer on the second metal layer (S70).

First, a low-dielectric material (100) may be prepared.

The low-dielectric material (100) of the present inventions may be, for example, a polymer containing elements of carbon (C), hydrogen (H), and oxygen (O), or may be composed of a polymer containing elements of carbon (C), hydrogen (H), and oxygen (O) and further containing nitrogen (N) or fluorine (F).

The low-dielectric material (100) may include, for example, one or more selected from the group consisting of polyethylene (PE), polypropylene (PP), polyethylene terephthalate (PET), polycyclohexylenedimethylene terephthalate (PCT), polyimide (PI), modified polyimide (MPI) polytetrafluoroethylene (PTFE), polyoxymethylene (PFA), fluorinated ethylene propylene (FEP), ethylene tetrafluoroethylene (ETFE), polyvinylidene fluoride (PVDF), glass fiber, and polytetrafluoroethylene (PTFE).

The polytetrafluoroethylene (PTFE) may include, for example, ceramics such as Al₂O₃, AIN, Si₃N₄, SiO₂, or BN, or carbon.

The thickness of the low-dielectric material (100) is preferably formed to be, for example, 25 to 200 µm.

Next, the low-dielectric material (100) may be heat-treated (S10). The heat treatment may be performed for the purpose of removing impurities remaining inside and outside the low-dielectric material (100), controlling surface morphology, and improving peel strength. The heat treatment may provide effects such as outgassing within the low-dielectric material (100), increasing the movement of surface polymer chains, changing surface morphology of the polymer, and altering physical properties.

The heat treatment is preferably performed using an infrared (IR) heater provided at the front end of a first surface treatment apparatus for the subsequently performed first surface treatment. The heat treatment may vary depending on the type of low-dielectric material 100, but is preferably performed at a temperature of, for example, 80 to 150°C. If the heat treatment temperature exceeds 150°C, the low-dielectric material (100) may be heated more than necessary, causing shrinkage or expansion of the material and resulting in quality degradation.

Next, the first surface treatment may be performed on the surface of the heat-treated low-dielectric material (100) (S20).

The first surface treatment involves surface treatment using a first surface treatment apparatus - specifically, a low-energy ion beam - while the movement of the polymer chains of the low-dielectric material is increased by the aforementioned heat treatment, thereby enabling the acquisition of hydrophilic functional groups on the polymer surface.

The first surface treatment may be performed using a low-energy ion beam, specifically a linear ion beam, with an ionized active gas or inert gas as a reaction gas. Surface treatment using an ion beam may involve irradiating the surface of the low-dielectric material (100) with an ion beam containing a reaction gas accelerated with energy in a specific range. For example, the first surface treatment may be performed using O₂, N₂, H₂, or Ar as a reaction gas.

The injection amount of the reaction gas may be, for example, 1 to 100 sccm (Standard Cubic Centimeter per Minute), preferably 50 to 100 sccm, and more preferably 60 to 80 sccm. Within this range, the ion beam can be stably irradiated onto the surface of the low-dielectric material.

The irradiation time of the ion beam is not particularly limited and may be appropriately adjusted depending on the purpose.

The ion dose density irradiated onto the surface of the low-dielectric material by the low-energy ion beam may be adjusted to be in the range of 1×10⁻¹⁴ to 5×10⁻¹⁷ dose/cm².

The voltage input to the low-energy ion beam may be applied in the range of 0.5 to 2.0 kV.

When the ion beam is irradiated under the aforementioned conditions, the effects of the ion beam irradiation and surface modification can be maximized. By increasing the peel strength, the stability of the bonding between the low-dielectric material and the metal electrode layer can be enhanced in subsequent steps.

Next, the low-dielectric material subjected to the first surface treatment may undergo a second surface treatment (S30).

The second surface treatment may be performed using a low-energy ion beam, specifically a linear ion beam, with an ionized reactive gas as the reaction gas. Specifically, the second surface treatment may be performed using O₂, N₂, or H₂ gas as a reaction gas.

Subsequently, the low-dielectric material subjected to the second surface treatment may undergo sequential surface treatments up to an n-th treatment (S40). In other words, the n-th surface treatment may be performed, which refers to repeatedly performing surface treatments on the surface of the second surface-treated low-dielectric material multiple times. In this case, the n-th surface treatment may refer to surface treatments performed at least three times, specifically from three to five times.

The methods for performing the second surface treatment and the n-th surface treatments may be performed as the same manner of the first surface treatment, except that inert gas may be used as the reaction gas.

In the first, second, and n-th surface treatments, the ion dose density irradiated onto the surface of the low-dielectric material by the low-energy ion beam may be adjusted to be in the range of 1×10⁻¹⁴ to 5×10⁻¹⁷ dose/cm².

In the second and n-th surface treatments, the voltage input to the low-energy ion beam may be in the range of 0.5 to 2.0 kV.

When the ion beam is irradiated under the aforementioned conditions, the effects of the ion beam irradiation and surface modification can be maximized. By increasing the peel strength, the stability of the bonding between the low-dielectric material and the metal electrode layer can be enhanced in subsequent steps.

In the present invention, by performing heat treatment on the low-dielectric material followed sequentially by the first surface treatment and the second to n-th surface treatments, it is possible to induce interactions between chemical functional groups formed on the polymer chains. This increases the surface energy and promotes entanglement of the polymer chains on the surface, stably enhancing the mobility of the polymer chains while restricting the flow of polymer chains on the surface. Through such surface morphology changes, the adhesion with dissimilar materials or substances can be significantly improved.

Accordingly, when various types of conductive metal layers are subsequently formed on the surface formed by the aforementioned heat treatment and surface treatments, excellent stability (against high temperature, moisture, etc.), between the low-dielectric material (e.g., polymer) and the metal electrode layer can be ensured.

Next, a first metal layer (300) may be formed on the surface of the low-dielectric material on which the n-th surface treatment has been completed (S50)

The first metal layer (300) may use one or more metals selected from the group consisting of copper (Cu), nickel (Ni), nickel-chromium alloy (NiCr), and nickel-copper alloy (NiCu). In the case of nickel alloys, it is preferable that the nickel content is 70% or more.

The first metal layer (300) may be formed by deposition using a physical vapor deposition (PVD) or evaporation process.

The deposition thickness of the first metal layer (300) is preferably formed, for example, in the range of 10 to 30 nm.

Next, a second metal layer (400) may be formed on the first metal layer (300) (S60).

The step of forming the second metal layer (400) may use one or more metals selected from the group consisting of copper (Cu), aluminum (Al), silver (Ag), gold (Au), platinum (Pt), and alloys thereof.

The type of metal constituting the second metal layer (400) may be the same as or different from the type of metal constituting the first metal layer (300).

The second metal layer (400) may be formed by deposition using a physical vapor deposition (PVD) or evaporation process.

The deposition thickness of the second metal layer (400) is preferably formed, for example, in the range of 100 to 500 nm.

Next, the method includes forming a metal electrode layer (500) on the second metal layer (400) (S70).

The metal electrode layer (500) may be formed using, for example, roll-to-roll electroplating or electroless plating equipment. The electroplating may be performed by methods commonly used in the relevant technical field.

In performing the electroplating, a suitable metal may be selected according to the metal texture intended by those skilled in the art, and it may be, for example, gold, silver, cobalt, aluminum, iron, nickel, chromium, or copper, with copper being preferred, though it is not limited thereto.

The thickness of the metal electrode layer (500) may be formed in the range of 2 to 20 µm.

Meanwhile, in an embodiment of the present invention, the flexible metal laminated may further include a protective layer formed on the metal electrode layer. The protective layer may be formed of an organic material to prevent oxidation and corrosion of the metal electrode layers.

The structure of the flexible metal laminated film manufactured according to an embodiment of the present invention may include: a heat-treated low-dielectric material (100); a first surface treatment layer (201) formed on the surface of the heat-treated low-dielectric material (100); an n-th surface treatment layer (200) formed on the first surface treatment layer (201); a first metal layer (300) formed on the n-th surface treatment layer (200); a second metal layer (400) formed on the first metal layer (300); and a metal electrode layer (500) formed on the second metal layer (400).

In this context, the term "surface treatment layer" is described for ease of illustration of the layer structure, and it is preferable that the meaning of "surface treatment layer" be interpreted as referring to the state of a surface-treated coating.

FIG. 3 is a schematic diagram showing the structure of a flexible metal laminated film manufactured according to another embodiment of the present invention.

Referring to FIG. 3, the flexible metal laminated film structure according to another embodiment of the present invention may include: a heat-treated low-dielectric material (100); a first surface treatment layer (201) formed on the surface of the heat-treated low-dielectric material (100); an n-th surface treatment layer (200) formed on the first surface treatment layer (201); a first metal layer (300) formed on the n-th surface treatment layer (200); a second metal layer (400) formed on the first metal layer (300); and a metal electrode layer (500) formed on the second metal layer (400).

Furthermore, the structure may further include: a first surface treatment layer (90) formed on the lower surface of the heat-treated low-dielectric material (100); an n-th surface treatment layer (91) formed on the first surface treatment layer (90); a first metal layer (80) formed on the n-th surface treatment layer (91); a second metal layer (70) formed on the first metal layer (80); and a metal electrode layer (500) formed on the second metal layer (70).

In other words, according to another embodiment of the present invention, although the process of performing heat treatment and surface treatment onf the upper surface of the low-dielectric material (100) was described above, the same process may be performed on the lower surface of the low-dielectric material (100), thereby forming a flexible multi-layer metal laminated film in a composite structure.

Furthermore, it is obvious that in addition to the aforementioned structure, any design changes -including layers, components, structures, and manufacturing process commonly used in the relevant filed - may be incorporated.

According to an embodiment of the present invention, a method for manufacturing a flexible metal laminated film for ultra-high frequency is provided to secure stability between a low-dielectric material and a metal electrode layer.

Specifically, according to the present invention, reactivity between dissimilar materials can be improved by applying heat treatment to low-dielectric materials to induce outgassing and surface morphology changs, and by performing first, second, and n-th order surface treatments using low-energy ion beams to increase the surface energy of the material. In addition, by performing multilayer conductive metal thin-film deposition and plating processes, it is possible to increase the adhesion and provide bonding stability between the surface-treated low-dielectric material, which is an insulator and the metal electrode, which is a conductor.

The flexible multilayer metal laminated film for ultra-high frequency manufactured by the method of the present invention may be applied to, for example, AiP (Antenna in Package) for 5G and 6G communications, sensors for autonomous vehicles, and the like. Accordingly, it is possible to achieve the effect of minimizing signal loss applied to various communication devices. However, the application examples of the flexible multilayer metal laminated film for ultra-high frequency are not limited thereto.

Hereinafter, the configuration of the present invention and its effects will be described in more detail through specific examples and comparative examples. However, there examples are provided merely to illustrate the present invention in more detail, and the scope of the present invention is not limited to these examples.

### [Example 1]

For a low-dielectric material consisting of a PTFE film with a thickness of 150 µm, heat treatment was performed at 150°C for 5 minutes using an infrared heater. Thereafter, a first surface treatment was performed on the surface of the film using a linear ion beam in an Ar gas atmosphere with an ion dose density of 5×10⁻¹⁴ dose/cm². Subsequently, a second surface treatment was performed in an N₂ gas atmosphere with an ion dose density of 5×10⁻¹⁴ dose/cm². For both the first and second surface treatments, the input voltage was set to 1.0 kV.

### [Example 2]

Except as described below, the procedure was carried out in the same manner as Example 1 described above. A third surface treatment was additionally performed using the same method as the second surface treatment.

### <Experimental Example 1: Measurement of Surface Roughness according to Heat Treatment>

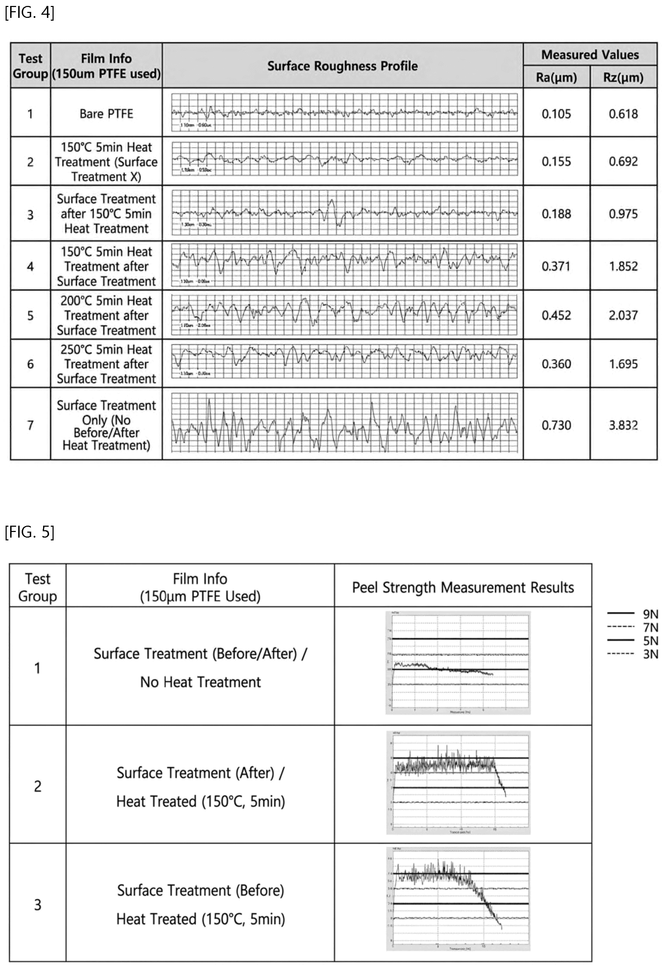

After performing Example 1, changes in surface roughness according to temperature was measured to confirm the changes in surface morphology for each heat treatment temperature. Surface roughness was measured using the SE800 model (contact-type surface roughness tester) from Kosaka Laboratory Ltd. The results are shown in FIG. 4.

Referring to FIG. 4, in Experimental Groups 4, 5, and 6, after surface treatment under the condition of an input voltage of 1.0 kV, first Ar gas with an ion dose density of 5×10⁻¹⁴ dose/cm², second N₂ gas with an ion dose density 5×10⁻¹⁴ dose/cm². After heat treatment on a hot plate at 150°C, 200°C, and 250°C for 5 minutes, respectively. The resulting average roughness (Ra) values were 0.371µm, 0.452µm, and 0.360µm, respectively, which were approximately half of the average roughness (Ra) 0.730µm measured immediately after surface treatment. Furthermore, since the decrease in surface roughness was not significantly different even as the temperature increased from 150°C, subsequent pre- and post-heat treatments were fixed at 150°C.

Meanwhile, to verify the effect of heat treatment performed prior to surface treatment, a control group (Bare PTFE) was heat-treated on a hot plated at 150°C for 5 minutes and then surface-treated under the same conditions as described above (Experimental Group 3). The results showed that, while the values were slightly higher than the control group (bare PTFE), significantly lower values of Ra 0.188 µm and Rz 0.692 µm were obtained compared to the conditions of Experimental Group 7 (surface treatment only) and Experimental Groups 4,5, and 6 (heat treatment after surface treatment).

### <Experimental Example 2: Measurement of Peel Strength according to Heat Treatment>

After performing Example 1, a peel strength measurement experiment was conducted by applying the same surface treatment and heat treatment conditions as in Experimental Example 1 (surface roughness measurement) to confirm the effect of heat treatment on peel strength.

The specific experimental method was as follows: after completing all steps of Example 1, Cu was deposited to a thickness of 200 nm, and then Cu foil layer with a thickness of 18 µm was formed by electroplating at a current density of 2 ASD for 50 minutes (Experimental Group 3). In addition, Experimental Group 2, in which heat treatment was performed after surface treatment, and Experimental Group 1, in which no heat treatment was performed either before or after surface treatment, where set as comparison groups. For the experimental groups, 90-degree peel strength was measured in accordance with the JIS C 6481 standard using LS1 equipment from LLOYD. The results are shown in FIG. 5.

Referring to FIG. 5, when only surface treatment was applied without heat treatment, a relatively low peel strength of about 5 N/cm was observed. Furthermore, when heat treatment was performed after surface treatment as in Experimental Group 2, the peel strength was approximated 6 N/cm. When heat treatment was performed before surface treatment as in Experimental Group 3, the highest peel strength of about 7 N/cm was observed.

### <Experimental Example 3: Evaluation of Surface Modification Effect according to Number of Surface Treatments>

To evaluate the surface modification effect according to the first, second, and n-th surface treatments in one embodiment of the present invention, the experimental groups were set as untreated (Control), first surface treatment only (Comparative Example), first and second surface treatments (Example 1), and first, second and third surface treatments (Example 2). The surface treatment conditions for each experimental group were: input voltage 1.0 kV, first Ar gas with ion dose density 5×10⁻¹⁴ dose/cm², second N₂ gas with ion dose density 5×10⁻¹⁴ dose/cm², and third N₂ gas with ion dose density 5 × 10⁻¹⁴ dose/cm².

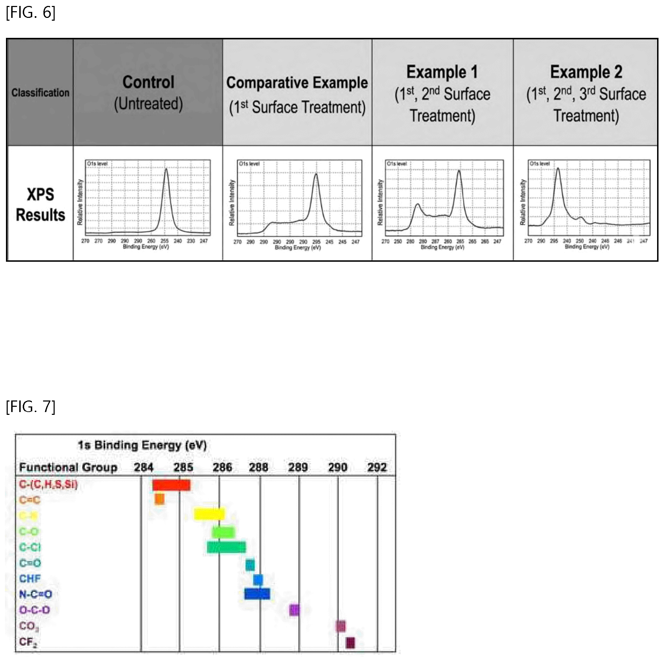

X-ray photoelectron spectroscopy (XPS) was performed for each experimental group to examine the chemical bonding states on the material surface. The results are shown in FIG.6, and FIG. 7 is a diagram showing the range of binding energy by chemical bonds.

Referring to FIG. 6 and FIG. 7 together, before surface treatment, the binding energy shows a peak at 292 eV, which corresponds to the typical chemical bonding of PTFE consisting C-F and C-F₂ bonds.

Subsequently, as the number of surface treatment steps increases - from first surface treatment (Comparative Example), to first and second surface treatments (Example 1), and then to first, second and third surface treatments (Example 2) - it can be observed that the peak at 292 eV gradually decreases while peak values are formed between 284 and 285 eV. This can be interpreted as C-F bonds being broken and bonds such as C-, C-O, and C-N being formed. Furthermore, it can be confirmed that upon proceeding to the third surface treatment, the peak at 292 eV (C-F bonds) completely disappears, and bonds such as C- and C-O are formed, thereby lowering the surface energy. This can be interpreted as having the effect of further enhancing the bonding strength with the metal layer formed in the subsequent step.

### <Experimental Example 4: Measurement of Peel Strength according to Ion Dose Density>

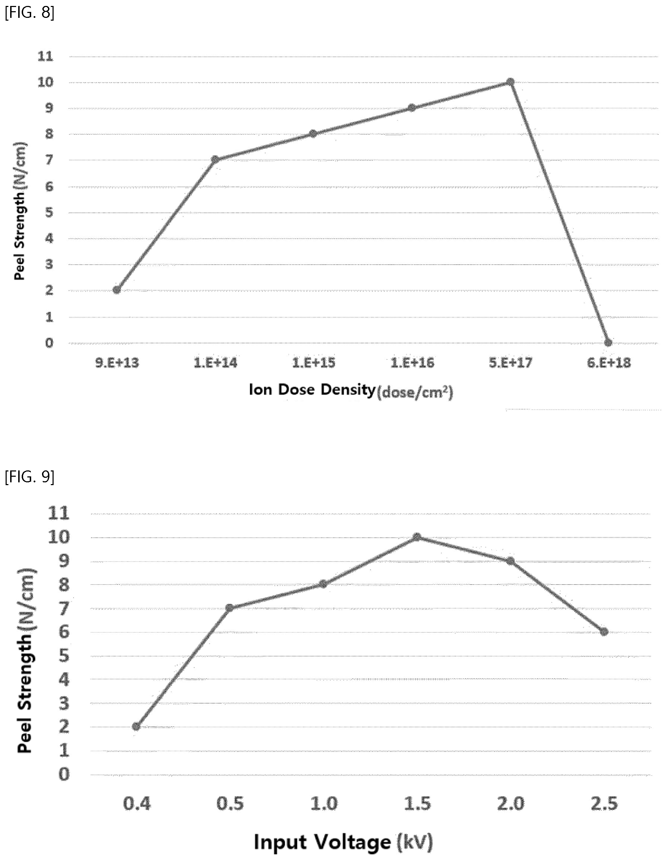

An experiment was conducted to measure peel strength according to ion dose density. After performing the heat treatment of Example 1, the input voltage was fixed at 1.0 kV and the ion dose density was varied from 9×10⁻³ to 6×10⁻¹⁷ dose/cm² for surface treatment. Subsequently, a 15 nm thick NiCr first metal layer and a 200 nm thick Cu second metal layer were formed, followed by electroplating to a thickness of 18 µm. The results were verified through a 90° peel strength measurement method in accordance with JIS C 6481, and are shown in FIG. 8.

Referring to FIG. 8, a low peel strength of 2 N/cm was observed at 9×10⁻¹³ dose/cm², and deformation due to overheating of the film was occurred at 6×10⁻¹⁷ dose/cm². That is, a satisfactory peel strength values of 7 N/cm or higher was obtained within the ion dose density range of 1×10⁻¹⁴ to 5×10⁻¹⁷ dose/cm².

### <Experimental Example 5: Measurement of Peel Strength according to Ion Beam Input Voltage>

An experiment was conducted to measure peel strength according to ion beam input voltage. After performing the heat treatment of Example 1, surface treatment was performed within a voltage range of 0.4 to 2.5 kV using first Ar gas with an ion dose density 5×10⁻¹⁴ dose/cm², second N₂ gas with an ion dose density 5×10⁻¹⁴ dose/cm², and third N₂ gas at ion dose density 5×10⁻¹⁴ dose/cm². Subsequently, a 15 nm thick NiCr first metal layer and a 200 nm thick Cu second metal layer were formed, followed by electroplating to a thickness of 18 µm. The results were verified through a 90° peel strength measurement method in accordance with JIS C 6481, and are shown in FIG. 9

Referring to FIG. 9, a low peel strength of 2 N/cm was observed at an input voltage of 0.4 kV, while a peel strength of 7 to 10 N/cm was secured at 0.5 to 2.0 kV. At 2.5 kV, the peel strength actually decreased to 6 N/cm. The decrease in peel strength at an input voltage of 2.5 kV is interpreted as being caused by excessive damage to the material surface. In other words, excellent peel strength characteristics were achieved within a voltage range of 0.5 to 2.0 kV.

Optimal embodiments are disclosed in the drawings and specifications. Although specific terms are used herein, they are used only for the purpose of describing the present invention and are not used to limit the scope of the present invention described in the meaning or claims. Therefore, those skilled in the art will understand that various modifications and other equivalent embodiments are possible therefrom. Therefore, the true technical protection scope of the present invention should be determined by the technical spirit of the attached patent claims.

## Claims

1. Method for manufacturing flexible metal laminated film for ultra-high frequency, comprising:
a step of preparing a low-dielectric material;
a step of heat-treating the low-dielectric material;
a step of performing a first surface treatment on a surface of the heat-treated low-dielectric material;
a step of performing a second surface treatment on a first-surface-treated low-dielectric material;
a step of sequentially performing surface treatments up to an n-th stage on a second-surface-treated low-dielectric material;
a step of forming a first metal layer on a surface of the low-dielectric material on which the n-th surface treatment has been completed;
a step of forming a second metal layer on the first metal layer; and
a step of forming a metal electrode layer on the second metal layer;
wherein the n-th stage is a 3^{rd} to 5^{th} stage.

2. Method for manufacturing flexible metal laminated film for ultra-high frequency according to claim 1, wherein the low-dielectric material is composed of a polymer containing elements of carbon (C), hydrogen (H), and oxygen (O), or a polymer containing the elements of carbon (C), hydrogen (H), and oxygen (O) and further containing nitrogen (N) or fluorine (F).

3. Method for manufacturing flexible metal laminated film for ultra-high frequency according to claim 2, wherein the low-dielectric material comprises one or more selected from the group consisting of polyethylene (PE), polypropylene (PP), polyethylene terephthalate (PET), polycyclohexylenedimethylene terephthalate (PCT), polyimide (PI), modified polyimide (MPI) polytetrafluoroethylene (PTFE), polyoxymethylene (PFA), fluorinated ethylene propylene (FEP), ethylene tetrafluoroethylene (ETFE), polyvinylidene fluoride (PVDF), glass fiber, and polytetrafluoroethylene (PTFE).

4. Method for manufacturing flexible metal laminated film for ultra-high frequency according to claim 1, wherein the heat treatment is performed at a temperature of 80 to 150°C using an infrared (IR) heater.

5. Method for manufacturing flexible metal laminated film for ultra-high frequency according to claim 1, wherein the first surface treatment is performed using a linear ion beam with an ionized active gas or inert gas as a reaction gas.

6. Method for manufacturing flexible metal laminated film for ultra-high frequency according to claim 5, wherein the first surface treatment is performed using O₂, N₂, H₂, or Ar gas as a reaction gas.

7. Method for manufacturing flexible metal laminated film for ultra-high frequency according to claim 1, wherein the second to n-th surface treatments are performed using a linear ion beam with an ionized active gas as a reaction gas.

8. Method for manufacturing flexible metal laminated film for ultra-high frequency according to claim 7, wherein the second to n-th surface treatments are performed using O₂, N₂, or H₂ gas as a reaction gas.

9. Method for manufacturing flexible metal laminated film for ultra-high frequency according to claim 5 or claim 7, wherein an ion dose density in the linear ion beam is in the range of 1×10⁻¹⁴ to 5×10⁻¹⁷ dose/cm².

10. Method for manufacturing flexible metal laminated film for ultra-high frequency according to claim 9, wherein an input voltage applied in the linear ion beam is in the range of 0.5 to 2.0 kV.

11. Method for manufacturing flexible metal laminated film for ultra-high frequency according to claim 1, wherein the step of forming the first metal layer uses one or more metals selected from the group consisting of copper (Cu), nickel (Ni), nickel-chromium alloy (NiCr), and nickel-copper alloy (NiCu), and wherein, in the case of nickel alloys, the nickel content is 70% or more.

12. Method for manufacturing flexible metal laminated film for ultra-high frequency according to claim 11, wherein the step of forming the first metal layer is performed by a physical vapor deposition (PVD) or evaporation process.

13. Method for manufacturing flexible metal laminated film for ultra-high frequency according to claim 1, wherein the step of forming the second metal layer uses one or more metals selected from the group consisting of copper (Cu), aluminum (Al), silver (Ag), gold (Au), platinum (Pt), and alloys thereof.

14. Method for manufacturing flexible metal laminated film for ultra-high frequency according to claim 13, wherein the step of forming the second metal layer is performed by a physical vapor deposition (PVD) or evaporation process.

15. Method for manufacturing flexible metal laminated film for ultra-high frequency according to claim 1, wherein the metal electrode layer is formed by performing electroplating using a meatal such as gold, silver, cobalt, aluminum, iron, nickel, chromium, or copper. ..
